# FASCICULE DE BREVET EUROPEEN

(11) **EP 3 936 383 B1**
(45) Date de publication et mention de la délivrance du brevet: **27.12.2023**
(21) Numéro de dépôt: 21183835.4
(22) Date de dépôt: 05.07.2021
(51) Int. Cl.: B60P 3/39

(54) **LIT DE PLAFOND MODULABLE POUR FOURGON AMENAGE**
MODULIERBARES DECKENBETT FÜR AUSGESTATTETEN KASTENWAGEN
MODULAR CEILING BED FOR CAMPER VAN

(30) Priorité: 06.07.2020 FR 2007153
(43) Date de publication de la demande: 12.01.2022
(73) Titulaire: Rapido, 53101 Mayenne (FR)
(72) Inventeur: ROUSSEAU, Pierre, 53940 Saint-Berthevin (FR)
(74) Mandataire: Fidal Innovation

(56) Documents cités:
- EP-A1- 3 093 191
- EP-A1- 3 415 366
- DE-U1- 20 118 211
- DE-U1-202011 101 838

## Description

### DOMAINE DE L'INVENTION

La présente invention se rapporte à l'aménagement de véhicule de loisir, notamment la mise en place d'un couchage dans un fourgon aménagé. L'aménagement de fourgon utilitaire en véhicule de loisir connait un succès important depuis quelques années. Le gabarit de ces véhicules les rend facile à conduire et à garer tout en offrant un espace intérieur suffisant pour offrir un hébergement à plusieurs personnes.

### ARRIERE-PLAN TECHNOLOGIQUE

Plus précisément, l'invention se rapporte à un lit de plafond rétractable dans un fourgon aménagé. Le lit de plafond rétractable permet d'augmenter la capacité de couchage jusqu'à 2 personnes en plus sans effort.

En effet, une alternative existe et consiste à transformer la partie dinette composée d'une table ajustable en hauteur et des sièges autour en un lit. Une telle manipulation est longue, fastidieuse et répétitive.

Le lit de plafond rétractable, notamment électrique, est connu des camping-cars dotés d'une carrosserie de type intégral ou profilé. La carrosserie de type intégral ou profilé offre des dimensions qui permettent de positionner un lit de plafond rétractable sans que sa présence n'affecte l'accès aux autres aménagements en place, que le lit de plafond rétractable soit en position rétractée ou déployée.

Dans le cas de la carrosserie de fourgon, une telle installation est également connue mais se fait au détriment du confort général. Ainsi, une fois rétracté, le lit de plafond rétractable peut obstruer le toit panoramique d'un fourgon. Une fois déployé, le lit de plafond rétractable peut également obstruer l'accès latéral arrière du fourgon.

Certes, un positionnement du lit dans le sens latéral permet de limiter cet impact mais sa longueur est par conséquent limitée en dessous de la longueur standard de 1,90m. En effet, la largeur intérieure de l'habitacle d'un fourgon standard n'excède pas 1 ,86m. Le confort s'en trouve donc affecté pour des adultes de taille standard.

Dans le domaine des véhicules de loisir, il est notamment connu du document DE202011101838 U1 un camping-car à carrosserie de type intégral équipé d'un lit rabattable électrique. Toutefois, dans le document DE202011101838 U1, le lit n'est pas monté longitudinalement dans le camping-car, ce qui ne permet pas de mettre un lit de 1,9 m.

Également, les images illustrent que le positionnement du lit empêche de bénéficier du toit panoramique en position rétractée.

Ensuite, il est flagrant que le lit rabattable de ce document, s'il était monté dans un fourgon, condamnerait l'accès par la porte latérale arrière du fourgon lorsque ledit lit rétractable est en position déployée.

En réalité, sur tous les aspects d'intégration du lit rabattable électrique vis-à-vis des autres éléments d'aménagement, le document DE202011101838 U1 est silencieux.

On peut également citer dans le domaine le document EP 3 093 191 A1 décrit un ensemble de lit à hauteur réglable destiné à être agencé dans une cabine de véhicule, le lit comportant un sommier horizontal d'axe principal longitudinal, caractérisé en ce que le lit comporte un support monté coulissant verticalement sur lequel le sommier est monté coulissant longitudinalement entre une position arrière de rangement et une position avant. L'invention concerne aussi un véhicule équipé d'un tel ensemble.

Enfin, le document DE 201 18211 U1 concerne un dispositif de commande d'un lit escamotable disposé à l'intérieur d'un véhicule aménagé, ledit lit étant divisé en un segment avant et un segment arrière qui sont articulés l'un par rapport à l'autre.

L'invention vise à améliorer la configuration d'un fourgon aménagé.

### RESUME DE L'INVENTION

Ainsi, l'invention se rapporte à un fourgon aménagé d'au moins 2,66 m de hauteur, comprenant :
- au moins un lit de plafond, positionné à l'avant du fourgon aménagé, mobile entre une position déployée et une position rétractée, d'une longueur d'au moins 1,75 mètres, voire 2 mètres en position déployée,
- au moins une ouverture inclinée située au-dessus du pare-brise sur laquelle est fixée une fenêtre panoramique,
- au moins une ouverture latérale située à l'avant d'un panneau latéral du fourgon aménagé permettant à une personne d'accéder à l'habitacle du fourgon aménagé,
caractérisé en ce que le lit de plafond rétractable est configuré pour ne pas obstruer lesdites ouvertures quelle que soit sa position.

Par fourgon aménagé, on désigne un fourgon utilitaire reconverti en véhicule de loisir grâce à l'ajout d'aménagements intérieurs destinés à permettre un logement de personnes de façon la plus confortable possible.

Un lit de plafond est un lit fixé au plafond par un système permettant de faire varier sa hauteur entre une position rétractée où le lit de plafond rétractable n'est pas utilisable pour dormir, étant par exemple en contact avec le reste du plafond du fourgon aménagé, et une position déployée laissant suffisamment d'espace entre le lit et le plafond du fourgon aménagé, par exemple au moins environ 60 cm, à une personne adulte de taille standard pour s'installer sur le lit de plafond.

Un lit de plafond positionné à l'avant d'un fourgon aménagé signifie que le lit est au moins en partie présent dans la partie cabine du fourgon aménagé en position déployée.

Le toit panoramique est positionné au-dessus du pare-brise, dans la continuité du pare-brise, sur un fronton. Ainsi, le toit panoramique permet d'améliorer la visibilité pour des personnes en position de conduire, en position de passager, ou en position debout dans la partie aménagée. L'inclinaison du fronton et du toit panoramique permet une bonne pénétration dans l'air du fourgon aménagé en mouvement avant.

Le lit de plafond comprend un cadre de lit fixe et au moins un cadre de lit mobile par rapport au cadre de lit fixe.

Un cadre de lit est un cadre rigide, par exemple métallique, en alliage métallique, aluminium ou autres matériaux adaptés et équipé d'un sommier, par exemple constitué de lattes de bois parallèles espacées, comme illustré, ou un système à ressort, par exemple.

Ainsi, le cadre mobile du lit a moins de risque de heurter un élément d'aménagement intérieur ou d'être bloqué par un élément d'aménagement intérieur.

Un dispositif de commutateur est adapté pour basculer du système de mouvement vertical du lit de plafond sur le système de mouvement horizontal lorsque le lit de plafond est au niveau vertical correspondant à la position déployée.
Ainsi, le cadre mobile du lit n'a pas de risque de heurter le plan incliné situé au-dessus du pare-brise.

Grâce à ces dispositions, le toit panoramique n'est pas obstrué, même lorsque le lit de plafond rétractable est rétracté contre le toit. Dans cette position du lit rétractable, un conducteur, un passager, ou un occupant du fourgon peut bénéficier du lit panoramique. Dans la position déployée du lit rétractable, une personne installée dans le lit peut bénéficier du toit panoramique.

Également, grâce à l'invention, l'ouverture latérale située à l'avant d'un panneau latéral du fourgon aménagé n'est pas obstruée lorsque le lit de plafond est en position déployée. Dans cette position du lit rétractable, il reste possible à un adulte de sortir du fourgon, ou d'entrer dans le fourgon, debout, en passant sous le lit. Dans la position rétractée du lit, il est aussi possible de sortir du fourgon ou d'entrer dans celui-ci.

Selon différents aspects, il est possible de prévoir l'une et/ou l'autre des dispositions ci-dessous.

Selon une réalisation, le mouvement vertical et le mouvement horizontal peuvent être combinés, c'est-à-dire actionner en même temps, pour gagner du temps. Le déploiement horizontal est dans ce cas ajusté pour éviter toute collision avec le haut du pare-brise.

Selon une réalisation, le lit de plafond comprend au moins un vérin permettant le déploiement et la rétraction horizontale du cadre de lit mobile.

Ainsi la fonction de déploiement horizontal est réalisée simplement, avec des éléments courants, peu chers et fiables.

Selon une réalisation, le lit de plafond en position déployée laisse une hauteur entre le sol du fourgon aménagé et la partie inférieure du lit de plafond autorisant le passage d'une personne debout, par exemple au moins 1,3 m.

Par personne debout, on entend une personne qui se tient en équilibre sur ses deux pieds, le dos plus ou moins courbé au moment du passage sous le lit de plafond. La hauteur autorisant le passage d'une personne debout est d'au moins 1m30.

Selon une réalisation, le lit de plafond comprend un système de déplacement vertical assuré par au moins deux sangles de traction positionnées à l'avant et à l'arrière du centre de gravité du lit de plafond, chaque sangle de traction passant par au moins une poulie fixée au plafond du fourgon aménagé, et un moteur adapté pour enrouler lesdites sangles de traction et se bloquer dans une position arrêtée, la longueur de chaque sangle de traction étant au moins suffisante pour laisser le lit de plafond descendre jusqu'à sa position déployée.

Ainsi la fonction de déploiement horizontal est réalisée simplement, avec des éléments courants, peu chers et fiables. Également, un tel système évite de devoir fixer sur les côtés latéraux du lit des éléments fixes qui viendraient obstruer l'ouverture latérale située à l'avant d'un panneau latéral du fourgon.

Selon une réalisation, au moins une première sangle de traction passe par au moins une première poulie fixée au plafond du fourgon aménagé, la première poulie étant fixée à proximité d'une première paroi latérale du fourgon aménagé, au moins une deuxième sangle de traction passe par au moins une deuxième poulie fixée au plafond du fourgon aménagé, la deuxième poulie étant fixée à proximité d'une deuxième paroi latérale du fourgon aménagé opposée à la première paroi latérale.

Grâce à ces dispositions, l'espace au-dessus du lit de plafond est mieux dégagé lorsque le lit de plafond est en position déployée.

Selon une réalisation, le déplacement vertical est guidé par un système de guidage vertical permettant de stabiliser le lit de plafond quelle que soit sa position, sans obstruer l'ouverture latérale du fourgon aménagé.

Grâce à ces dispositions, l'ouverture latérale n'est pas obstruée lorsque le lit de plafond rétractable est déployé, tout en garantissant au lit de plafond rétractable une stabilité facilitant la montée et la descente sur le lit de plafond rétractable et améliorant le confort une fois installé dans le lit.

Selon une réalisation, le système de guidage vertical comprend au moins deux rails de guidage positionnés du côté latéral du lit de plafond opposé au panneau latéral comprenant une ouverture latérale, le premier rail de guidage étant positionné sur ledit côté latéral du lit de plafond, le second rail de guidage étant positionné sur un côté longitudinal du lit de plafond.

Grâce à ces dispositions, la stabilité est renforcée.

Selon une réalisation, le second rail est positionné sur le côté longitudinal du lit de plafond le plus éloigné de la cabine du fourgon aménagé.

Grâce à ces dispositions, le rail peut être placé sur une paroi verticale habituellement positionnée à cet endroit pour délimiter un espace de vie dans le fourgon aménagé.

Indépendamment de l'utilisation du lit dans un fourgon à toit panoramique, une invention se rapporte aux aspects innovants du lit déployable en soi et de son intégration dans le fourgon.

### BREVE DESCRIPTION DES DESSINS

Des modes de réalisation de l'invention seront décrits ci-dessous par référence aux dessins, décrits brièvement ci-dessous :
[Fig. 1] représente un fourgon aménagé de taille supérieure, c'est-à-dire d'au moins 2,66m de hauteur hors tout, vue en trois dimensions depuis un point extérieur à l'avant droit du fourgon aménagé par rapport à son sens de déplacement, et en hauteur.
[Fig. 2] représente une vue en coupe latérale du fourgon aménagé selon l'invention, le lit de plafond en position rétractée.
[Fig. 3] représente une vue en coupe latérale du fourgon aménagé selon l'invention, le lit de plafond en position déployée verticalement uniquement.
[Fig. 4] représente une vue en coupe latérale du fourgon aménagé selon l'invention, le lit de plafond en position déployée verticalement et horizontalement.
[Fig. 5] représente une vue en trois dimensions d'un lit de plafond seul depuis un point en hauteur à l'arrière droit par rapport à son sens de déplacement une fois monté dans un fourgon aménagé, en position rétractée.
[Fig. 6] est une vue similaire à la figure 5 du lit de plafond seul, en position déployée.

Sur les dessins, des références identiques désignent des objets identiques ou similaires.

### DESCRIPTION DETAILLEE

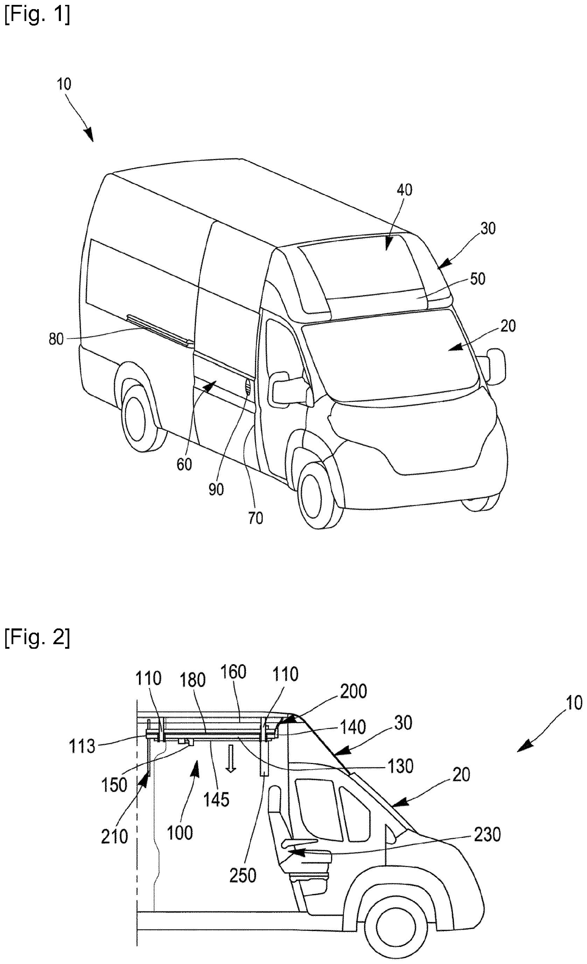

La figure 1 est une vue en trois dimensions depuis l'extérieur d'un fourgon aménagé **10** commercialisé au moins en France à la date priorité sous la marque Fiat, Peugeot ou Citroën, dont la carrosserie est de type « H3 ». Les dimensions du véhicule en dehors de toutes modifications sont 2,76m de haut hors tout (±0,1m). En dehors de tout aménagement, les dimensions de l'habitacle intérieur sont 1,76m de large (±0,1m), et 2,2m de haut (±0,1m).

Vu de l'extérieur, sur la figure 1, une modification visible par rapport au fourgon de série se situe au-dessus du pare-brise **20,** sur un fronton **30** incliné qui forme un plan incliné dans la continuité d'un pare-brise **20.** Une ouverture centrée a été pratiquée sur le fronton **30** et une fenêtre panoramique **40** a été fixée sur cette ouverture. La taille de la fenêtre panoramique **40** est de l'ordre de 90 cm - 130 cm de large et 70- 90 cm de haut. La fenêtre panoramique **40** est galbée dans les deux sens. La fenêtre panoramique **40** peut être réalisée dans un verre feuilleté. Le verre feuilleté est teinté de façon à filtrer efficacement les rayons ultraviolets UV-A et UV-B du soleil. La teinte est également suffisamment sombre pour empêcher de voir distinctement à travers depuis l'extérieur quand il fait jour, permettant ainsi un bon niveau d'intimité. D'autres matériaux sont envisageables, tel que par exemple une matière acrylique. Une bande de thermoplastique **50** est positionnée entre le pare-brise et la fenêtre panoramique **40.** Dans cet exemple, la fenêtre panoramique **40** n'est pas mobile. En variante, la fenêtre panoramique pourrait être mobile ou inclure un ouvrant. La fenêtre panoramique **40** peut, le cas échéant, inclure un rideau déployable pour occulter la fenêtre panoramique, par exemple pour plus d'obscurité au petit matin.

Juste derrière une cellule cabine, sur un côté latéral droit par rapport au sens de déplacement du fourgon aménagé, une porte coulissante **60,** initialement destinée au chargement et déchargement de marchandise dans le fourgon, permet un accès direct à la partie aménagée du fourgon aménagé. Un contour **70** de la porte coulissante est visible figure 1, ainsi qu'un rail d'ouverture **80.** La porte coulissante **60** est en position fermée sur la figure 1, obstruant l'ouverture latérale. En actionnant une poignée **90** de la porte coulissante, on peut la déverrouiller. On peut alors la déplacer le long du rail horizontal **80** sur le côté de la carrosserie afin de dégager l'ouverture latérale située à l'avant du panneau latéral du fourgon aménagé **10.**

Un lit de plafond **100,** situé à l'intérieur du fourgon aménagé, n'est pas visible sur la figure 1.

Comme visible sur la figure 2, le lit de plafond **100** est disposé dans la partie avant du fourgon aménagé à l'arrière de la cabine conducteur. Sur la figure 2, l'extrémité avant du lit de plafond se situe à peu près au niveau, dans la direction longitudinale du fourgon, du siège conducteur. La cinématique du lit de plafond **100** est illustrée par les vues en coupe des trois figures 2, 3, 4. Le sens des flèches et l'ordre des figures de ces trois figures correspondent au sens de déplacement d'un déploiement. En inversant l'ordre des figures et des flèches, on obtient l'illustration d'une rétraction.

La figure 2 représente la position du lit de plafond **100** rétractée. Dans cette position, le lit de plafond **100** comprend deux bords longitudinaux 120, 130 parallèles à la direction d'un occupant normalement installé dans le lit pour y dormir (seul le bord 130 est visible sur les figures 2, 3 et 4), et deux bords latéraux 113, 140 transversaux. Le lit de plafond 100 présente une forme définissant une direction privilégiée pour dormir, en fonction de laquelle les termes « longitudinaux » et « latéraux » sont définis, mais, bien entendu, rien n'empêche une personne, notamment de petite taille, de dormir selon une autre orientation. Quatre sangles de traction **110** sont positionnées sur deux bords longitudinaux **120, 130** du lit de plafond **100** et respectivement proches de deux bords latéraux **113, 140** du lit de plafond **100** dans la position déployée verticalement. Deux sangles sur les quatre sont visibles sur les figures 2, 3 et 4. Chacune des sangles de traction **110** contourne les bords latéraux **113, 140** du lit de plafond, et passe par une poulie non représentées située sur un plafond du fourgon aménagé. Les poulies sont montées sur le plafond selon un axe parallèle aux bords longitudinaux **120, 130** du lit de plafond. Lorsque les sangles de traction **110** sont enroulées sur une tige **145** actionnée par un moteur **150** jusqu'à ce qu'il n'y ait plus d'espace entre le plafond du fourgon **160** et le dessus du lit de plafond (dessus du couchage porté par le dessus 170 du sommier) (ou en tout cas un espace insuffisant pour y dormir), le lit de plafond **100** est en position rétractée (cf. figure 2). Les sangles de traction **110** sont maintenues bloquées dans cette position rétractée (cf. figure 2) jusqu'à ce qu'un utilisateur actionne une commande de déploiement par un actionneur ou sur un panneau de commande non représenté.

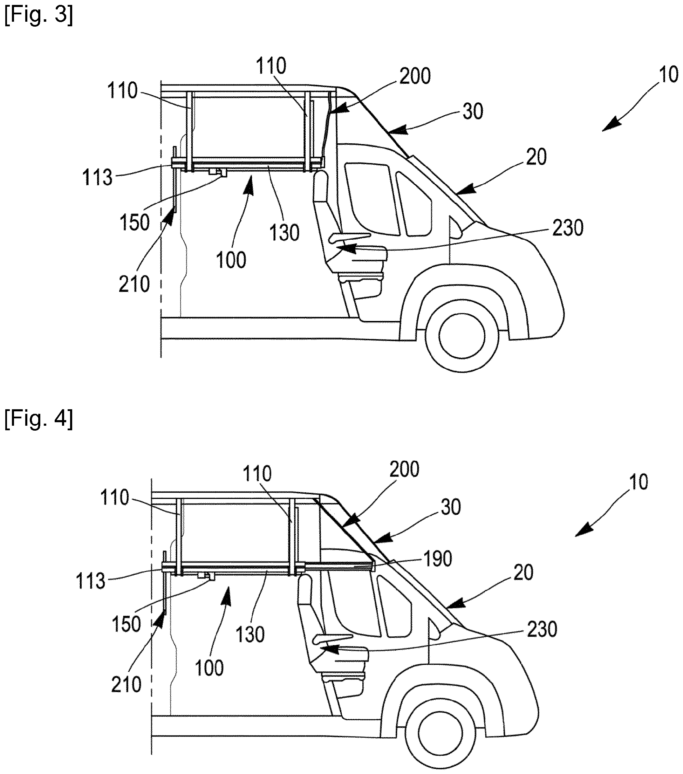

En position rétractée, un cadre de lit fixe **180** est visible. Un cadre de lit mobile **190** est replié dans la structure du cadre de lit fixe **180** par coulissement. Des sangles anti-basculement **200** détendues (cf. Figure 4) s'étendent entre le plafond du fourgon **160** et le bord latéral avant **240** du cadre de lit mobile **190** pour empêcher un effet de levier lorsque le lit de plafond **100** est en position déployée (cf. figure 4).

Le moteur **150** embarqué est situé sous le cadre fixe **180** et permet d'actionner l'enroulement des sangles de traction **110** autour de la tige **145.** Afin d'alimenter le moteur **150,** une chaine porte câble **210** est située près du panneau latéral du fourgon aménagé **10** opposé au panneau latéral comprenant l'ouverture latérale. Une première extrémité de la chaine porte câble **210** est fixée à proximité de l'arrivée des câbles d'alimentation électrique sur le panneau latéral, une deuxième extrémité de la chaine porte câble est fixée sur le cadre fixe du lit de plafond **100.**

Une flèche sur la figure 2 indique le sens du premier mouvement vertical du lit de plafond **100** lorsque l'utilisateur actionne une commande de déploiement depuis un panneau de commande non représenté.

Une flèche sur la figure 4 indique le sens du deuxième mouvement horizontal du cadre mobile **190** du lit de plafond **100** lorsque l'utilisateur actionne une commande de déploiement depuis un panneau de commande non représenté.

Lorsque l'utilisateur actionne la commande de déploiement, le moteur électrique **150** se débloque. Une fois débloqué, il tourne dans un premier sens et actionne la tige 145 dans le sens opposé au sens d'enroulement des sangles de traction, provoquant la descente du lit. Le moteur impose une vitesse de rotation à la tige en freinant sa vitesse de rotation en générant un phénomène de frein moteur. Le diamètre de la tige est choisi plutôt petit pour limiter son encombrement, et pour ne pas entrainer le lit de plafond de façon rapide.

La figure 3 présente le lit de plafond **100** entièrement déployé dans le sens vertical uniquement. Le lit de plafond s'arrête verticalement juste au-dessus d'un siège du conducteur **230,** dans une position qui laisse une hauteur de, par exemple, au moins 60 cm entre le lit de plafond et le plafond du fourgon.

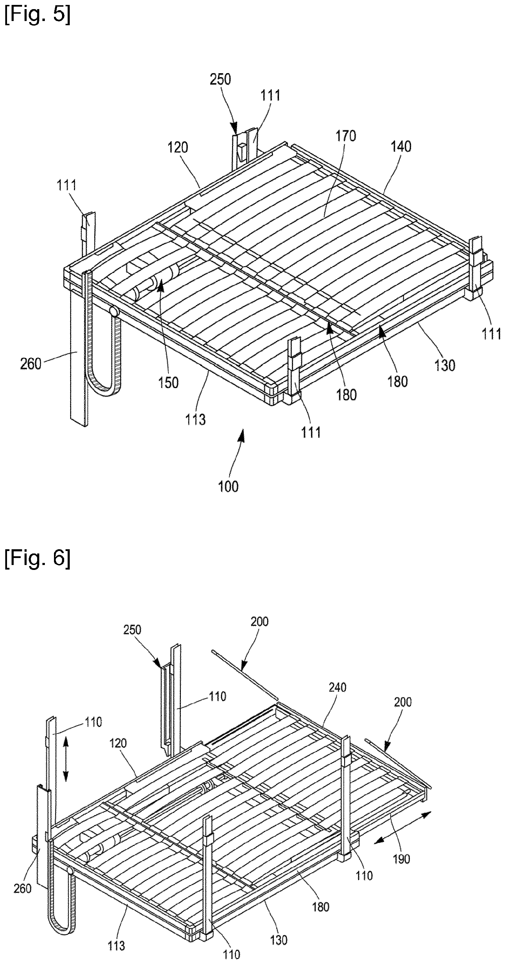

Une fois le déploiement vertical effectué, un commutateur non visible bascule l'alimentation électrique du moteur **150** vers deux vérins électriques non visibles qui poussent le cadre de lit mobile **190** en dehors du cadre de lit fixe **180** le long de tubes coulissants non visibles jusqu'à une position déployée (cf. figure 4 et figure 6) dans la cabine, sous la fenêtre panoramique **40.** En position déployée, les sangles anti-basculement **200** sont tendues, empêchant ainsi un basculement du lit de plafond **100** vers le bas au niveau de la cabine. D'autres systèmes et cinématiques de déploiement du cadre de lit mobile **190** sont envisageables. La hauteur de couchage permet à un utilisateur de monter sur le lit à quatre pattes à l'aide d'une échelle non représentée qui prend appui sur le côté latéral **113** du lit de plafond **100** qui fait face à l'arrière du fourgon aménagé **10.**

Une fois le cadre de lit mobile **190** déployé, comme représenté figure 4, le bord latéral **240** du cadre mobile **190** formant le côté latéral du lit de plafond **100** déployé vient toucher le fronton **30,** ou est à proximité de celui-ci. Ainsi, il n'y a pas de risque de chute d'un objet posé sur le lit de plafond **100** en position déployée. Également, il est impossible d'accéder visuellement à la partie supérieure du lit à travers le pare-brise, permettant ainsi une plus grande intimité.

Les actionneurs des vérins et le moteur **150** verrouillent la position déployée horizontalement et verticalement.

Comme on le voit sur la figure 5, la stabilité du lit de plafond **100** est assurée par deux rails de guidage **250, 260** positionnés sur deux bords perpendiculaires **120, 113** du lit de plafond **100** et proches du panneau latéral du fourgon opposé au panneau comprenant l'ouverture latérale. Un tel positionnement des rails de guidage **250, 260** stabilise le lit de plafond **100** en rotation. Ainsi, le lit de plafond **100** garde une excellente stabilité en mouvement. Le lit de plafond **100** est également stable en position déployée, et reste immobile même si l'utilisateur bouge sur le lit de plafond **100** en position déployée (figures 4 et 6) ou prend appui sur le lit de plafond **100** en position déployée. Le positionnement du rail de guidage **260** sur le bord latéral **113** du lit de plafond **100** correspond au positionnement d'une cloison perpendiculaire (non représentée) au panneau latéral du fourgon aménagé qui délimite un espace occupé par une table et des sièges (non représentés), ou d'autres aménagements. Ainsi, le rail de guidage **260** peut être fixé sur cette paroi.

La rétraction est lancée par l'utilisateur depuis le panneau de commande non représenté. Les mouvements de rétraction se font selon une séquence inversée : d'abord la rétraction horizontale, ensuite la rétraction verticale, puis un verrouillage en position rétractée. La tige **145** tourne dans un deuxième sens opposé au premier sens de rotation permettant le déploiement jusqu'à ce que le dessus du lit de plafond **100** entre en contact avec le plafond du fourgon aménagé, ou vienne à proximité de celui-ci.

La vitesse de rétraction est similaire à la vitesse de déploiement.

L'invention n'est pas limitée aux modes de réalisation présentés et d'autres modes de réalisation apparaîtront clairement à l'homme du métier.

Il est notamment possible de prévoir un déploiement horizontal manuel, un déploiement horizontal électrique débrayable en cas de panne des vérins électrique, un déploiement horizontal par basculement d'un cadre de lit mobile autour d'un axe de repliement, un dessous du lit de plafond équipé de lumière d'éclairage afin d'éclairer l'habitacle en position rétractée, deux portes coulissantes à droite et à gauche, un positionnement de l'ouverture latérale située à l'avant d'un panneau latéral du fourgon aménagé opposé à celui de la figure 1 dans le cas des fourgons destinés à des pays avec conduite à gauche comme au Royaume-Uni, etc.

## Revendications

1. Fourgon aménagé (10) d'au moins 2,66m de hauteur, comprenant :
- au moins un lit de plafond (100) comprenant un cadre de lit fixe (180) et au moins un cadre de lit mobile (190) par rapport au cadre de lit fixe (180), positionné à l'avant du fourgon aménagé (10), mobile entre une position déployée et une position rétractée, d'une longueur d'au moins 1,75 m, voire 2 m, en position déployée,
- au moins une ouverture inclinée située au-dessus du pare-brise (20) sur laquelle est fixée une fenêtre panoramique (40),
- au moins une ouverture latérale située à l'avant d'un panneau latéral du fourgon aménagé (10) permettant à une personne d'accéder à l'habitacle du fourgon aménagé (10),
**caractérisé en ce que** le lit de plafond (100) est configuré pour ne pas obstruer lesdites ouvertures quelle que soit sa position et **en ce qu'**un dispositif de commutateur est adapté pour basculer d'un système de déplacement vertical du lit de plafond (100) sur un système de déplacement horizontal lorsque le lit de plafond (100) est au niveau vertical correspondant à la position déployée.

2. Fourgon aménagé (10) selon la revendication 1, dans lequel le lit de plafond (100) comprend au moins un vérin permettant le déploiement et la rétraction horizontale du cadre de lit mobile (190).

3. Fourgon aménagé (10) selon l'une des revendications 1 à 2, dans lequel le lit de plafond (100) en position déployée laisse une hauteur entre le sol du fourgon aménagé et la partie inférieure du lit de plafond (100) autorisant le passage d'une personne debout, par exemple au moins 1,3 m.

4. Fourgon aménagé (10) selon l'une des revendications 1 à 3, dans lequel le lit de plafond (100) comprend un système de déplacement vertical assuré par au moins deux sangles de traction (110) positionnées à l'avant et à l'arrière du centre de gravité du lit de plafond (100), chaque sangle de traction (110) passant par au moins une poulie fixée au plafond du fourgon aménagé (10), et un moteur (150) adapté pour enrouler lesdites sangles de traction (110) et se bloquer dans une position arrêtée, la longueur de chaque sangle de traction (110) étant au moins suffisante pour laisser le lit de plafond (100) descendre jusqu'à sa position déployée.

5. Fourgon aménagé (10) selon la revendication 4, dans lequel au moins une première sangle de traction (110) passe par au moins une première poulie fixée au plafond (160) du fourgon aménagé (10), la première poulie étant fixée à proximité d'une première paroi latérale du fourgon aménagé (10), et au moins une deuxième sangle de traction (110) passe par au moins une deuxième poulie fixée au plafond (160) du fourgon aménagé (10), la deuxième poulie étant fixée à proximité d'une deuxième paroi latérale du fourgon aménagé (10) opposée à la première paroi latérale.

6. Fourgon aménagé (10) selon l'une des revendications 1 à 5, dans lequel le déplacement vertical est guidé par un système de guidage vertical permettant de stabiliser le lit de plafond (100) quelle que soit sa position, sans obstruer l'ouverture latérale du fourgon aménagé (10).

7. Fourgon aménagé (10) selon la revendication 6, dans lequel le système de guidage vertical comprend au moins deux rails de guidage (250, 260) positionnés du côté latéral (120) du lit de plafond (100) opposé au panneau latéral comprenant une ouverture latérale, le premier rail de guidage (250) étant positionné sur ledit côté latéral (120) du lit de plafond (110), le second rail de guidage (260) étant positionné sur un côté longitudinal (113, 140) du lit de plafond (110).

8. Fourgon aménagé (10) selon la revendication 7, dans lequel le second rail (260) est positionné sur le côté longitudinal (113) du lit de plafond (100) le plus éloigné de la cabine du fourgon aménagé (10).

## Patentansprüche

1. Ausgestatteter Kastenwagen (10) mit einer Höhe von mindestens 2,66 m, der Folgendes umfasst:
- mindestens ein Deckenbett (100) mit einem festen Bettrahmen (180) und mindestens einem relativ zu dem festen Bettrahmen (180) beweglichen Bettrahmen (190), der vorne an dem ausgestatteten Kastenwagen (10) positioniert ist, zwischen einer ausgefahrenen und einer eingefahrenen Position beweglich ist und in der ausgefahrenen Position eine Länge von mindestens 1,75 m oder sogar 2 m hat,
- mindestens eine geneigte Öffnung, die sich oberhalb der Windschutzscheibe (20) befindet, an der ein Panoramafenster (40) befestigt ist,
- mindestens eine laterale Öffnung, die sich vorne in einer Seitenwand des ausgestatteten Kastenwagens (10) befindet und einer Person den Zugang zum Fahrgastraum des ausgestatteten Kastenwagens (10) ermöglicht,
**dadurch gekennzeichnet, dass** das Deckenbett (100) so konfiguriert ist, dass es die genannten Öffnungen unabhängig von seiner Position nicht blockiert, und dadurch, dass eine Schaltvorrichtung so ausgelegt ist, dass sie von einem vertikalen Bewegungssystem des Deckenbetts (100) auf ein horizontales Bewegungssystem umschaltet, wenn sich das Deckenbett (100) auf der vertikalen Ebene befindet, die der ausgefahrenen Position entspricht.

2. Ausgestatteter Kastenwagen (10) nach Anspruch 1, wobei das Deckenbett (100) mindestens einen Zylinder umfasst, der das horizontale Aus- und Einfahren des beweglichen Bettrahmens (190) ermöglicht.

3. Ausgestatteter Kastenwagen (10) nach einem der Ansprüche 1 bis 2, wobei das Deckenbett (100) in der ausgefahrenen Position eine Höhe zwischen dem Boden des ausgestatteten Kastenwagens und dem unteren Teil des Deckenbetts (100) belässt, die den Durchgang einer stehenden Person zulässt, beispielsweise mindestens 1,3 m.

4. Ausgestatteter Kastenwagen (10) nach einem der Ansprüche 1 bis 3, wobei das Deckenbett (100) ein vertikales Bewegungssystem umfasst, das durch mindestens zwei vor und hinter dem Schwerpunkt des Deckenbetts (100) positionierte Zuggurte (110), wobei jeder Zuggurt (110) über mindestens eine an der Decke des ausgestatteten Kastenwagens (10) befestigte Rolle läuft, und einen zum Aufwickeln der genannten Zuggurte (110) und zum Arretieren in einer angehaltenen Position ausgelegten Motor (150) gewährleistet wird, wobei die Länge jedes Zuggurts (110) zumindest ausreicht, um das Deckenbett (100) bis in seine ausgefahrene Position absinken zu lassen.

5. Ausgestatteter Kastenwagen (10) nach Anspruch 4, wobei mindestens ein erster Zuggurt (110) über mindestens eine erste Rolle läuft, die an der Decke (160) des ausgestatteten Kastenwagens (10) befestigt ist, wobei die erste Rolle in der Nähe einer ersten lateralen Wand des ausgestatteten Kastenwagens (10) befestigt ist, und mindestens ein zweiter Zuggurt (110) über mindestens eine zweite Rolle läuft, die an der Decke (160) des ausgestatteten Kastenwagens (10) befestigt ist, wobei die zweite Rolle in der Nähe einer der ersten lateralen Wand gegenüberliegenden zweiten lateralen Wand des ausgestatteten Kastenwagens (10) befestigt ist.

6. Ausgestatteter Kastenwagen (10) nach einem der Ansprüche 1 bis 5, wobei die vertikale Bewegung durch ein vertikales Führungssystem geleitet wird, das es ermöglicht, das Deckenbett (100) unabhängig von seiner Position zu stabilisieren, ohne die laterale Öffnung des ausgestatteten Kastenwagens (10) zu blockieren.

7. Ausgestatteter Kastenwagen (10) nach Anspruch 6, wobei das vertikale Führungssystem mindestens zwei Führungsschienen (250, 260) umfasst, die an der lateralen Seite (120) des Deckenbetts (100) gegenüber der Seitenwand mit einer lateralen Öffnung positioniert sind, wobei die erste Führungsschiene (250) an der genannten lateralen Seite (120) des Deckenbetts (110) positioniert ist und die zweite Führungsschiene (260) an einer longitudinalen Seite (113, 140) des Deckenbetts (110) positioniert ist.

8. Ausgestatteter Kastenwagen (10) nach Anspruch 7, wobei die zweite Schiene (260) an der longitudinalen Seite (113) des Deckenbetts (100) positioniert ist, die am weitesten von der Fahrerkabine des ausgestatteten Kastenwagens (10) entfernt ist.

## Claims

1. Van (10) at least 2.66m high, comprising :
- at least one ceiling bed (100) comprising a fixed bed frame (180) and at least one movable bed frame (190) movable relative to the fixed bed frame (180), positioned at the front of the van (10), movable between an extended position and a retracted position, with a length of at least 1.75 m, or even 2 m, in the extended position,
- at least one inclined opening above the windscreen (20), to which a panoramic window (40) is attached,
- at least one lateral opening located in front of a side panel of the van (10), allowing a person to access the interior of the van (10),
**characterized in that** the ceiling bed (100) is configured so as not to obstruct said openings whatever its position, and **in that** a switch device is adapted to switch from a vertical displacement system of the ceiling bed (100) to a horizontal displacement system when the ceiling bed (100) is at the vertical level corresponding to the deployed position.

2. A van (10) according to claim 1, wherein the ceiling bed (100) comprises at least one actuator allowing horizontal deployment and retraction of the movable bed frame (190).

3. Van (10) according to one of claims 1 to 2, in which the ceiling bed (100) in the deployed position leaves a height between the floor of the van and the lower part of the ceiling bed (100) allowing the passage of a standing person, for example at least 1.3 m.

4. A van (10) according to one of claims 1 to 3, in which the ceiling bed (100) comprises a vertical displacement system provided by at least two traction straps (110) positioned to the front and rear of the center of gravity of the ceiling bed (100), each traction strap (110) passing over at least one pulley fixed to the ceiling of the van (10), and a motor (150) adapted to wind said traction straps (110) and lock in a stopped position, the length of each traction strap (110) being at least sufficient to allow the ceiling bed (100) to move down to its deployed position.

5. The van (10) according to claim 4, wherein at least one first traction strap (110) passes through at least one first pulley attached to the ceiling (160) of the van (10), the first pulley being attached in the vicinity of a first side wall of the van (10), and at least one second traction strap (110) passes through at least one second pulley fixed to the ceiling (160) of the panel van (10), the second pulley being fixed in the vicinity of a second side wall of the van (10) opposite the first side wall.

6. Van (10) according to one of claims 1 to 5, in which the vertical displacement is guided by a vertical guide system enabling the ceiling bed (100) to be stabilized in any position, without obstructing the side opening of the van (10).

7. Van (10) according to claim 6, wherein the vertical guide system comprises at least two guide rails (250, 260) positioned on the lateral side (120) of the ceiling bed (100) opposite the side panel comprising a lateral opening, the first guide rail (250) being positioned on said lateral side (120) of the ceiling bed (110), the second guide rail (260) being positioned on a longitudinal side (113, 140) of the ceiling bed (110).

8. The van (10) according to claim 7, wherein the second rail (260) is positioned on the longitudinal side (113) of the ceiling bed (100) furthest from the cab of the van (10).
